(19) Europäisches Patentamt
European Patent Office
Office européen des brevets

(11)  EP 3 189 251 B1

(12)  **FASCICULE DE BREVET EUROPEEN**

(45) Date de publication et mention
de la délivrance du brevet:
**13.06.2018  Bulletin 2018/24**

(21) Numéro de dépôt: **15766916.9**

(22) Date de dépôt: **03.09.2015**

(51) Int Cl.:
*F16G 3/08* (2006.01)

(86) Numéro de dépôt international:
**PCT/FR2015/052334**

(87) Numéro de publication internationale:
**WO 2016/034821 (10.03.2016 Gazette 2016/10)**

(54) **DISPOSITIF DE JONCTION POUR BANDES TRANSPORTEUSES**

VERBINDUNGSVORRICHTUNG FÜR FÖRDERBÄNDER

JUNCTION DEVICE FOR CONVEYOR BELTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats de validation désignés:
**MA**

(30) Priorité:  **04.09.2014  FR 1402007**

(43) Date de publication de la demande:
**12.07.2017  Bulletin 2017/28**

(73) Titulaire: **Aser**
**42400 Saint-Chamond (FR)**

(72) Inventeur: **JAKOB, Horst**
**F-30360 Deaux (FR)**

(74) Mandataire: **Gaillarde, Frédéric F. Ch. et al
Cabinet Germain & Maureau
31-33, rue de la Baume
75008 Paris (FR)**

(56) Documents cités:
**FR-A1- 2 743 611      FR-A1- 2 803 836
US-A- 3 625 809**

## Description

On connaît les bandes transporteuses, appelées également tapis transporteurs, utilisées pour transporter différents matériaux ou différents produits, tels que du charbon, des minerais, des produits industriels ou agricoles. Ces bandes transporteuses consistent en des bandes réalisées en un élastomère armé, ou en une matière de synthèse armée, d'une longueur et d'une largeur appropriées, dont les extrémités doivent être reliées entre elles, avant montage, ou après montage, sur des dispositifs de support et d'entraînement comportant des rouleaux de renvoi et des rouleaux fous. Souvent ces dispositifs comportent également des organes tendeurs, ayant pour but de bien tendre la bande transporteuse.

Jusqu'à présent différents moyens ont été utilisés pour effectuer cette liaison des extrémités des bandes transporteuses. À l'origine, et encore aujourd'hui, on utilise la vulcanisation lorsque la bande est constituée d'un élastomère vulcanisable armé. Après un travail de préparation destiné à créer dans chaque extrémité des sortes de degrés respectivement complémentaires qui s'appliquent les uns sur les autres lorsque l'on rapproche lesdites extrémités, la vulcanisation est effectuée avec apport de chaleur et de pression comme cela est bien connu. Une variante de la vulcanisation est le collage à froid.

Un autre moyen de liaison connu consiste dans le fait d'utiliser des agrafes en forme générale de U, découpées dans du feuillard métallique, lesquelles agrafes comportent des plaques supérieures et des plaques inférieures reliées par des charnons, ces agrafes étant fixées en deux séries à cheval sur chacune des extrémités de bande transporteuse à relier, de telle sorte que les charnons dépassent et que ceux d'une série puissent être imbriqués entre les charnons de l'autre série, une tige de liaison et d'articulation étant ensuite passée à l'intérieur des charnons imbriqués de manière à relier ainsi les deux extrémités en formant une sorte de charnière. Les moyens connus utilisés pour fixer les agrafes sur les extrémités de bande transporteuse consistent en des moyens de fixation à tige tels que des crampons, des rivets et des vis.

Dans un passé plus récent on a proposé des dispositifs de jonction faisant appel à des éléments de liaison plats en élastomère armé ou en matière de synthèse armée, disposés respectivement sur un côté et sur l'autre côté des extrémités de bande transporteuse et fixés sur lesdites extrémités qu'il s'agit de relier. Un exemple de tels dispositifs de jonction est donné par le brevet des États-Unis d'Amérique n° 5 839 571 (ou FR 2 743 611 A1 membre de la même famille de brevet), dans lequel les armatures consistent en des nappes de câbles croisées. Ces dispositifs comportent une plaque supérieure et une plaque inférieure, ainsi qu'une partie centrale reliant les deux plaques. Cependant, col. 8 l. 12 à 17, le même brevet envisage de limiter le dispositif à deux plaques, une plaque supérieure et une plaque inférieure.

Par convention dans tout le texte de la présente demande le terme « supérieur », appliqué à une pièce ou à une partie de pièce, signifiera situé à l'opposé des rouleaux du dispositif de support et d'entraînement de la bande transporteuse. Le terme « inférieur », appliqué à une pièce ou à une partie de pièce, signifiera situé du côté de la bande transporteuse qui est en contact avec les rouleaux du dispositif de support et d'entraînement de la bande transporteuse. De même, appliqué aux dispositifs de jonction, le terme « extérieur » sera utilisé pour désigner l'espace orienté à l'opposé des rouleaux et le terme « intérieur » sera utilisé pour désigner l'espace orienté du côté des rouleaux. Ces notions sont donc indépendantes de la position visuelle de la bande transporteuse, que l'on considère le brin supérieur de la bande transporteuse ou que l'on considère le brin inférieur de la bande transporteuse en service.

Également par convention, le terme « armature » s'appliquera à des éléments plats, le plus souvent uniques dans chaque plaque du dispositif de jonction, mais pouvant se présenter à plusieurs, le terme fortement extensible caractérisant la propriété d'extensibilité de chaque élément de l'armature et le terme inextensible caractérisant l'inextensibilité de chaque élément de l'armature. Cette convention s'appliquera aussi bien à la description qu'aux revendications et à l'abrégé descriptif.

En ce qui concerne précisément les armatures, l'inventeur de la présente invention a remarqué que lors du passage sur les rouleaux, en particulier les rouleaux de renvoi, il se produit une extension de la face supérieure de la bande transporteuse dans le sens longitudinal et une compression de la face inférieure de la bande transporteuse dans le sens longitudinal, cette extension et cette compression se transmettant à la plaque supérieure du dispositif de jonction et respectivement à la plaque inférieure, du dispositif de jonction.

Ces distorsions sont préjudiciables à la durée d'utilisation des jonctions. Un arrêt d'une bande transporteuse entraîne non seulement des frais de réparation mais également la perte de production correspondante de l'installation industrielle dont elle fait partie.

C'est pourquoi dans des brevets antérieurs, notamment dans le brevet des États-Unis d'Amérique 5 839 571, au nom de Jakob, l'inventeur de la présente demande a proposé de doter les armatures des plaques supérieures et celles des plaques inférieures de propriétés d'extensibilité identiques et de propriétés de compressibilité identiques dans le but de faire face au problème posé par la différence de parcours qui se produit lors du passage des rouleaux, évoqué plus haut.

Cependant l'expérience sur le terrain aidant, l'inventeur de la présente invention a constaté que les effets des mesures prises sur les armatures des plaques supérieures et des plaques inférieures, n'étaient pas exploités au maximum. En effet, du fait que l'armature des plaques inférieures et celle des plaques supérieures étaient dotées des mêmes propriétés d'extensibilité, il ne se créait pas un différentiel d'extension suffisant entre l'extension de la plaque supérieure et celle de la plaque inférieure lors du passage sur les rouleaux de renvoi, surtout en présence d'organes tendeurs, ce qui était préjudiciable à la transmission de force et pouvait conduire à une détérioration de l'armature de la plaque supérieure soumise à des extensions de trop grande ampleur.

La présente invention a pour objet de proposer des améliorations et des perfectionnements qui portent sur des agencements particuliers et nouveaux ainsi que sur des propriétés particulières et nouvelles, des armatures des plaques supérieures des dispositifs de jonction et sur celles de leurs plaques inférieures, que ces plaques soient ou non réunies par une partie centrale et que cette partie centrale lorsqu'elle existe soit, ou non, reliée aux plaques en faisant corps avec celles-ci ou en étant rapportée. Ces perfectionnements ont pour but d'optimiser la durée de vie des dispositifs de jonction en service en particulier dans le cas d'installations lourdes.

L'invention a également pour objet de proposer un agencement des armatures permettant de rendre des dispositifs de jonction aptes à être montés sur des bandes transporteuses d'épaisseurs différentes.

Après l'exécution d'essais pratiques, l'inventeur de la présente demande d'invention a obtenu d'excellents résultats en dotant la plaque supérieure d'une armature dont les propriétés d'extensibilité et de compressibilité contrastent fortement avec celles des armatures de la plaque inférieure. En d'autres termes, la présente invention a pour objet un dispositif de jonction pour bandes transporteuses comportant deux éléments de jonction se présentant sous forme de plaques en élastomère ou en matière de synthèse, les plaques comportant des armatures, une des plaques, dite plaque supérieure, étant, lors de l'utilisation, disposée contre la face extérieure des extrémités de bande transporteuse et l'autre plaque, dite plaque inférieure, étant, lors de l'utilisation, disposée contre la face intérieure des extrémités de bande transporteuse, les deux plaques étant, lors de l'utilisation du dispositif de jonction, assujetties aux extrémités de bande transporteuse à l'aide de moyens connus, remarquable en ce que le dispositif de jonction est doté d'armatures dont les propriétés d'extensibilité et de compressibilité, dans le sens horizontal, diffèrent très fortement, selon leur agencement au sein du dispositif de jonction, et en ce que la limite d'extensibilité des armatures fortement extensibles sous l'effet de forces de traction n'est pas atteinte avant que, sous l'effet de forces de traction équivalentes, se produise la rupture des armatures inextensibles ou quasi inextensibles.

De manière générale, et dans le cadre de la présente invention, le vocable « fortement extensible » signifie que l'extensibilité de l'armature est au moins supérieure à environ 15 %, de préférence encore supérieure à environ 20 %. De la même manière, le vocable « inextensible, ou quasi inextensible », signifie que l'extensibilité maximum de l'armature ne dépasse pas environ 3%. De cette manière, on comprend que les propriétés d'extensibilité et de compressibilité des armatures diffèrent, notamment fortement.

Une première combinaison d'armatures a été essayée et a donné d'excellents résultats. Dans cette combinaison la plaque supérieure a été dotée d'une armature fortement extensible. L'extensibilité de cette armature peut aller couramment jusqu'à 20 % de la longueur initiale avant application de force dans la direction longitudinale, c'est-à-dire la direction de défilement de la bande transporteuse, une fois le dispositif de jonction monté. L'extensibilité peut d'ailleurs être, si nécessaire, bien plus importante, par exemple jusqu'à 60 %. De préférence, l'extensibilité de l'armature fortement extensible est comprise entre 15 % et 60 % et de préférence encore entre 20 % et 60 %. La plaque inférieure, elle, est dotée d'une armature inextensible, ou quasi inextensible, son extensibilité maximum ne dépassant pas environ 3 %.

En raison de ce fort contraste le différentiel d'extension au passage des rouleaux est maximum mais l'extension de l'armature extensible de la plaque supérieure n'atteint pas son maximum possible avant la rupture de l'armature inextensible ou quasi inextensible de la plaque inférieure. Comme la transmission des forces de traction est assurée par l'armature de la plaque inférieure la résistance à la rupture de celle-ci est choisie en fonction des utilisations prévues pour la bande transporteuse, avec un coefficient de sécurité. On comprend que la probabilité d'une fatigue ou d'une détérioration du dispositif de jonction est ainsi largement réduite. Il faut remarquer que cette version de l'invention peut être appliquée à divers dispositifs de jonction à la condition qu'ils comportent une plaque supérieure et une plaque inférieure, et ce, qu'il existe ou non une partie centrale reliant les deux plaques et que s'il en existe une qu'elle fasse corps avec les deux plaques ou qu'elle soit rapportée.

La présente invention propose en outre une solution décisive concernant l'adaptabilité des dispositifs de jonction à des épaisseurs de bande transporteuse différentes. Dans cette solution la plaque supérieure et la plaque inférieure sont raccordées en formant une seule pièce avec une partie de liaison centrale disposée en diagonale. Cet agencement combine l'adaptabilité du dispositif de jonction au montage sur des bandes transporteuses d'épaisseurs différentes et les propriétés des armatures concernant l'extensibilité et la compressibilité des armatures dans le sens longitudinal de la bande transporteuse.

Ladite partie de liaison centrale est constituée d'une toile inextensible ou quasiment inextensible enrobée d'élastomère. Cette partie de liaison est disposée obliquement entre la plaque supérieure et la plaque inférieure et fait corps d'une part avec la face supérieure d'un côté de la plaque inférieure et d'autre part avec la face inférieure de la plaque supérieure, du côté opposé de la plaque supérieure. La toile inextensible ou quasi inextensible enrobée d'élastomère de la partie de liaison centrale se prolonge d'un côté sur la face inférieure de la plaque supérieure avec laquelle elle fait corps et de l'autre côté avec la face supérieure de la plaque inférieure, avec laquelle elle fait corps.

Cette disposition permet d'utiliser les propriétés d'inextensibilité, ou de quasi inextensibilité de cette troisième armature commune aux deux plaques, mais en outre du fait que les zones de raccordement entre la partie de liaison centrale et la face supérieure de la plaque inférieure d'une part et la face inférieure de la plaque supérieure d'autre part constituent des pseudo-charnières, elle autorise un débattement qui rend possible d'écarter, ou de rapprocher, la plaque supérieure et la plaque inférieure, en permettant ainsi de monter les dispositifs de jonction de cette version sur des bandes transporteuses d'épaisseurs différentes.

De plus on remarque que les dispositifs de jonction de cette version sont réversibles, c'est-à-dire qu'ils peuvent être montés indifféremment en inversant la plaque supérieure et la plaque inférieure, ce qui exclut de ce fait l'éventualité d'un montage erroné, les propriétés d'extensibilité importante et celles d'extensibilité nulle ou quasi nulle, étant conservées.

L'inventeur a également prévu que les armatures inextensibles, ou quasi inextensibles utilisées dans les différentes formes de réalisation puissent être constituées de toiles du genre de celles utilisées dans les machines de fabrication de papier dans lesquelles elles servent de tamis et de support de transport pour le papier en cours de formation et qui sont constituées d'un tissage de câbles métalliques inextensibles, ou quasi-inextensibles, de fils métalliques inextensibles, ou quasi-inextensibles, ou de filaments de matière de synthèse inextensibles, ou quasi-inextensibles. Comme ces toiles montées en tant qu'armatures de plaques de dispositif de jonction selon l'invention seraient éventuellement soumises à un effet de peignage, l'inventeur a prévu qu'en cas de présence de moyens de fixation à tige tels que des crampons, des rivets, des vis, les lisières de ces tissus, c'est-à-dire les lisières du textile utilisé pour réaliser les armatures inextensibles, ou quasi inextensibles, soient, dans les dispositifs de jonction selon l'invention, disposées perpendiculairement à la direction de défilement de la bande transporteuse qui est celle du dispositif de jonction monté sur la bande transporteuse.

L'invention va maintenant être décrite de façon détaillée appliquée à des formes de réalisation préférées mais non exclusives, illustrées par le dessin dans lequel :

- la figure 1 représente un dispositif de jonction de l'art antérieur, vu en perspective et en coupe ;
- la figure 2 représente le même dispositif de jonction de l'art antérieur monté sur les extrémités d'une bande transporteuse, passant sur un rouleau de renvoi ;
- la figure 3 représente, en perspective, un premier dispositif de jonction selon l'invention ;
- la figure 4 représente, en coupe longitudinale, le dispositif de jonction de la figure 3, monté sur l'extrémité d'une bande transporteuse ;
- la figure 5 représente, en coupe longitudinale, le dispositif de jonction de la figure 3, monté sur les extrémités d'une bande transporteuse, passant sur un rouleau de renvoi ;
- la figure 6 représente en coupe longitudinale un deuxième dispositif de jonction selon l'invention ;
- la figure 7 représente le dispositif de jonction de la figure 6, monté sur les extrémités de deux bandes transporteuses d'épaisseur différente en deux vues a et b ;
- la figure 8 représente le dispositif de jonction de la figure 6 monté sur une bande transporteuse, passant sur un rouleau de renvoi.

Les mêmes références sont utilisées sur les mêmes pièces ou parties dans toutes les figures du dessin.

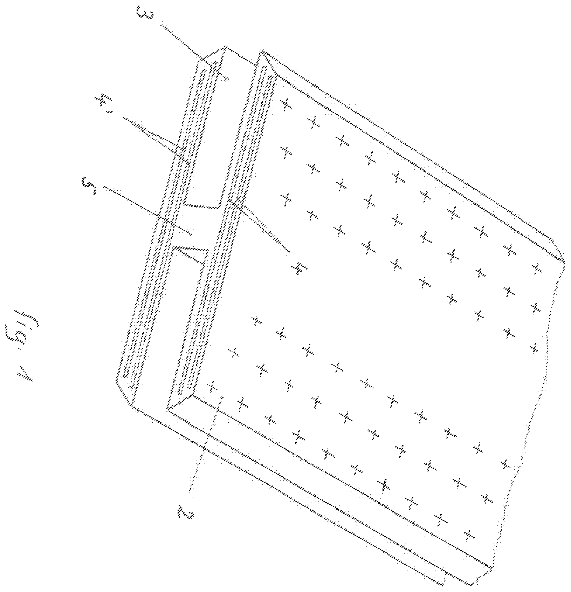

La figure 1 représente un dispositif de jonction de l'art antérieur. On remarque une plaque supérieure 2 armée dans ce cas par des nappes 4 de câbles parallèles superposées et croisées, et une plaque inférieure 3 armée de la même manière que la plaque supérieure par des nappes 4'. Facultativement, comme dit précédemment, une partie centrale 5 relie la plaque inférieure et la plaque supérieure.

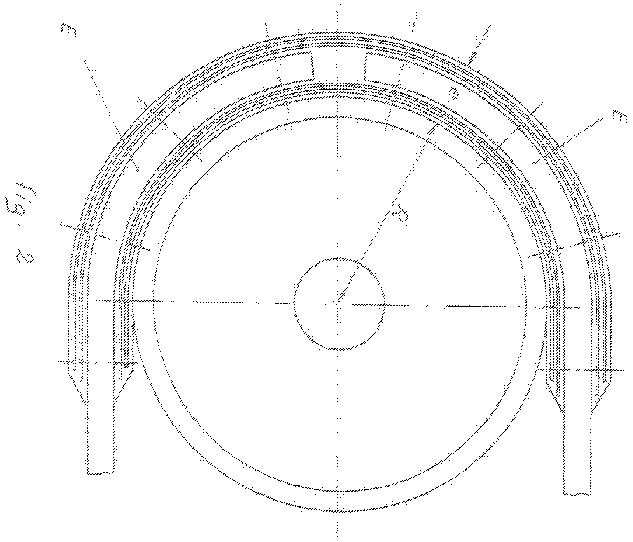

La figure 2 représente le dispositif de jonction de la figure 1 monté sur une bande transporteuse, lors du passage sur un rouleau. On remarque le rouleau de rayon R, les extrémités E de bande transporteuse, la plaque inférieure et la plaque supérieure munies d'armatures. La distance entre la face supérieure de la plaque supérieure et la face inférieure de la plaque inférieure est cotée e. On comprend que la différence de parcours se calcule grosso modo selon la formule

$$\Delta parcours = [2\pi(R + e) - 2\pi R]\frac{180}{360} \, soit \, \pi(R + e) - \pi R$$

le parcours ne s'effectuant que sur environ 180° et non 360°.

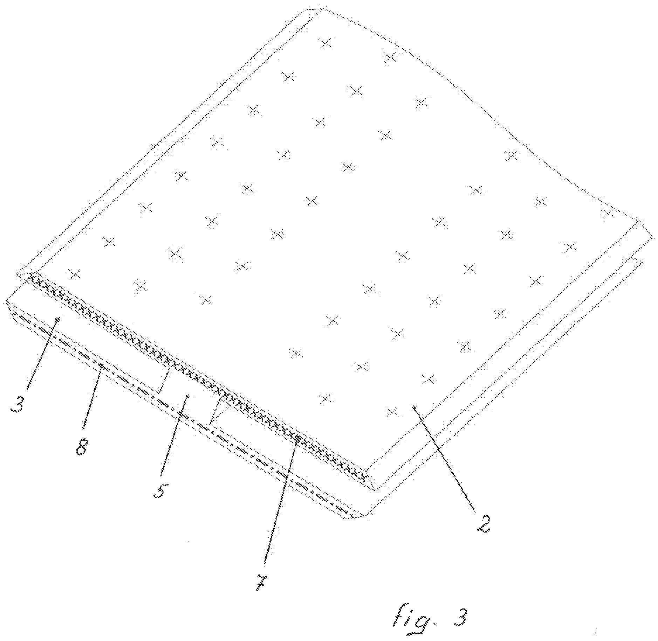

La figure 3 représente un premier dispositif de jonction selon l'invention, en coupe longitudinale. Les différents éléments sont représentés comme suit :

(2) plaque supérieure

(3) plaque inférieure

(5) partie centrale (il est rappelé que la partie centrale peut soit ne pas exister, soit faire corps avec les plaques, soit être rapportée).

(7) armature extensible et compressible dans le sens longitudinal

(8) armature inextensible ou quasi inextensible.

On comprend que l'armature 8 de la plaque inférieure 3 étant inextensible, l'effet de la différence de parcours s'applique entièrement sur l'armature 7, fortement extensible, de la plaque supérieure 2. Comme l'extension maximum de l'armature extensible n'est pas atteinte avant que l'armature inextensible atteigne sa limite de rupture l'armature fortement extensible ne peut jamais être soumise à des forces de traction qui, autrement, pourraient entraîner sa détérioration. Comme on donne à l'armature inextensible des résistances à la rupture compatibles avec les forces de traction qui s'exercent lors du fonctionnement de la bande transporteuse, avec bien sûr un coefficient de sécurité, l'armature inextensible, de transmission de force, sert de « fusible ». Ainsi les deux armatures sont à l'abri des détériorations et la longévité de service du dispositif de jonction est maximum.

En ce qui concerne la résistance à la rupture de l'armature inextensible compatible avec les forces de traction qui s'exercent lors du fonctionnement de la bande transporteuse, il est entendu que celle-ci est choisie librement par l'homme du métier en fonction de l'application souhaitée. Il sera ainsi utilisé une armature inextensible présentant une résistance relativement faible pour un dispositif de jonction pour une bande transporteuse légère et mince, par exemple destinée à transporter des produits alimentaires, et il sera utilisé une armature inextensible présentant une résistance relativement élevée dans le cas d'un dispositif de jonction pour une pour une bande transporteuse lourde, par exemple destinée à transporter des minerais.

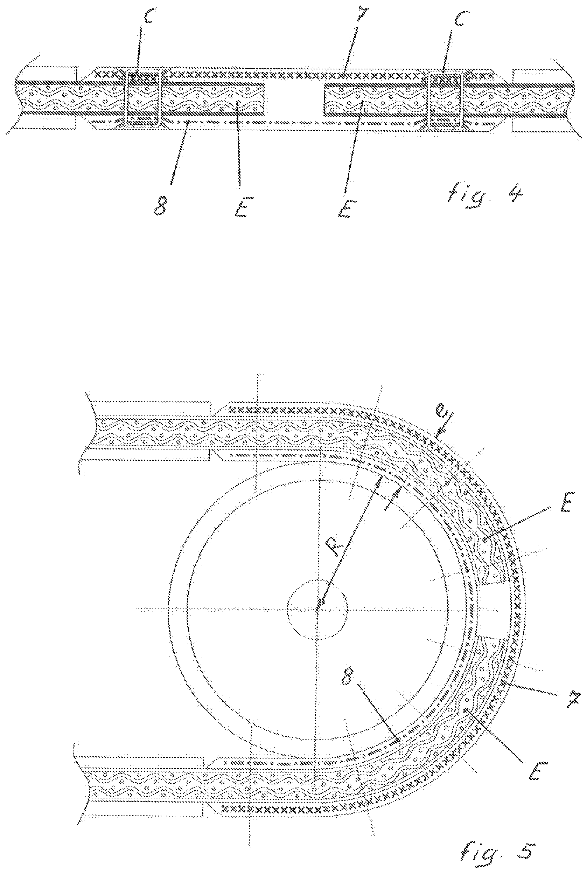

La figure 4 représente, en coupe longitudinale, le dispositif de jonction de la figure 3, monté sur l'extrémité d'une bande transporteuse. On retrouve l'armature de la plaque supérieure 7, extensible, l'armature inextensible, ou quasi inextensible 8 de la plaque inférieure. La fixation est assurée ici par des crampons C.

La figure 5 montre le passage sur un rouleau de renvoi du dispositif de jonction de la figure 3. Il est clair que l'armature fortement extensible 7 s'est prêtée, en s'allongeant de la différence de parcours entre celui de la plaque inférieure et celui de la plaque supérieure, l'armature inextensible 8 ne s'allongeant pas, ou pratiquement pas. La référence R indique le rayon du rouleau, la référence e indique l'épaisseur du dispositif de jonction, la référence E les extrémités de bande transporteuse sur lesquelles est monté le dispositif de jonction.

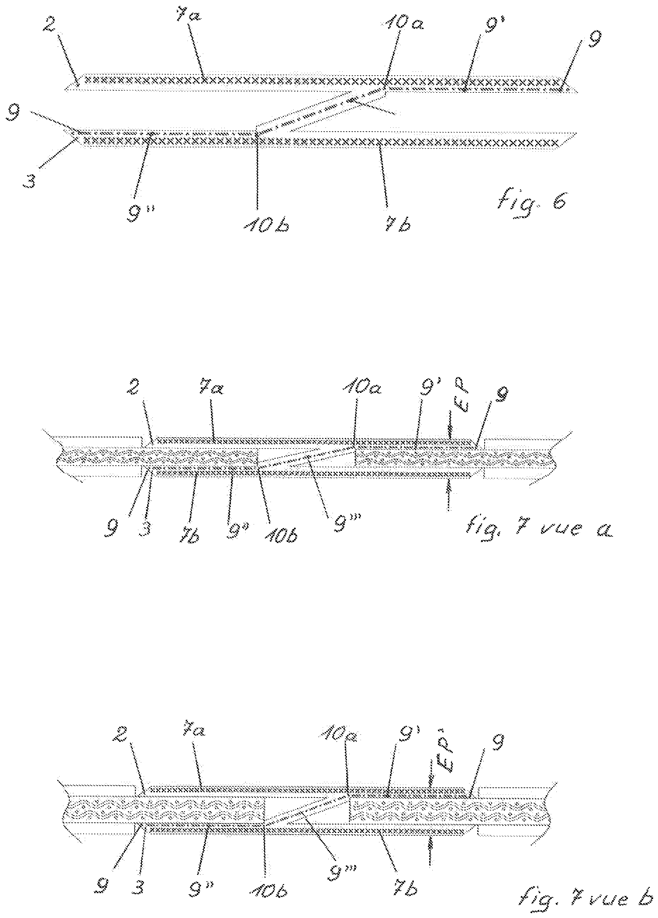

La figure 6, représentant un deuxième dispositif de jonction selon l'invention, permet de le voir monté sur une bande transporteuse, passant sur un rouleau de renvoi, en coupe, une armature 7a fortement extensible étant disposée dans la plaque supérieure 2 et une autre armature, fortement extensible 7b étant disposée dans la plaque inférieure 3. Une troisième armature 9 souple et inextensible relie, en faisant corps avec elles par la matière dont elle est enrobée, la plaque supérieure 2 et la plaque inférieure 3, une partie 9' de cette armature 9 faisant corps avec l'un des côtés, le côté gauche 3', de la face supérieure de la plaque inférieure, une autre partie 9" de cette armature 9 faisant corps avec l'autre côté, le côté droit 2', de la face inférieure de la plaque supérieure 2, une partie centrale oblique 9'" de raccordement de ladite troisième armature 9 reliant les deux parties 9' et 9" en formant deux pseudo-charnières 10a, 10b sur les zones de raccordement avec respectivement la plaque supérieure 2 et la plaque inférieure 3.

La figure 7 montre, vue a, le dispositif de jonction de la figure 6 monté sur une bande transporteuse d'une première épaisseur EP et, vue b, le même dispositif de jonction de la figure 5 monté sur une bande transporteuse d'une deuxième épaisseur EP', plus forte. On comprend que cette adaptation peut se faire grâce aux pseudo-charnières 10a, 10b qui autorisent un rapprochement, ou un éloignement, des plaques 2, 3. A noter que ce dispositif de jonction est réversible la notion de plaque supérieure et de plaque inférieure n'étant utilisée que pour la description.

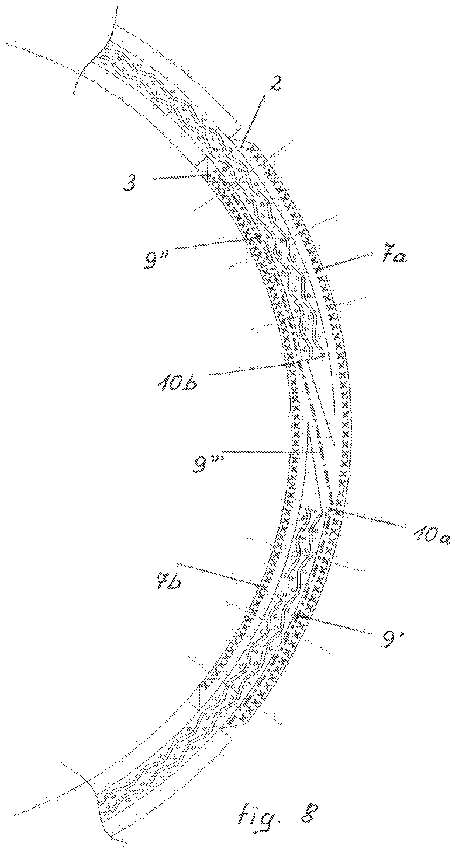

La figure 8 représente le dispositif de jonction de la figure 6 monté sur une bande transporteuse, passant sur un rouleau de renvoi. On y retrouve tous les éléments de la figure 6, à savoir les plaques 2, 3, les armatures extensibles 7a, 7b, l'armature inextensible 9 et ses différentes parties 9', 9", et 9'".

Les différences de parcours sont absorbées grâce aux armatures extensibles 7a et 7b. La transmission de force est assurée par l'armature inextensible 9.

Ainsi sont atteints tous les buts poursuivis par l'invention, c'est-à-dire un accroissement certain de la longévité en service des dispositifs de jonction selon l'invention et l'adaptabilité au montage sur des bandes transporteuses d'épaisseur différente d'un dispositif de jonction qui, de plus, a l'avantage d'être réversible, c'est-à-dire de pouvoir être monté sans risque d'erreur de positionnement des plaques.

## Revendications

1.   Dispositif de jonction pour bandes transporteuses comportant deux éléments de jonction se présentant sous forme de plaques en élastomère ou en matière de synthèse, les plaques comportant des armatures (7, 7a, 7b, 8, 9), une des plaques, dite plaque supérieure (2), étant, lors de l'utilisation, disposée contre la face extérieure des extrémités (E, E) de bande transporteuse et l'autre plaque, dite plaque inférieure (3), étant, lors de l'utilisation, disposée contre la face intérieure des extrémités de bande transporteuse, les deux plaques (2, 3) étant, lors de l'utilisation du dispositif de jonction, assujetties aux extrémités de bande transporteuse à l'aide de moyens connus,

**caractérisé en ce que**

le dispositif de jonction est doté d'armatures (7, 7a, 7b, 8, 9) dont les propriétés d'extensibilité et de compressibilité, dans le sens horizontal, diffèrent très fortement, selon leur agencement au sein du dispositif de jonction,

et **en ce que** la limite d'extensibilité des armatures (7, 7a, 7b) fortement extensibles sous l'effet de forces de traction n'est pas atteinte avant que, sous l'effet de forces de traction équivalentes, se produise la rupture des armatures inextensibles ou quasi inextensibles (8, 9).

2. Dispositif de jonction selon la revendication 1
   **caractérisé en ce que** des armatures (8, 9) sont inextensibles ou quasi inextensibles et sont constituées d'un tissage de câbles métalliques inextensibles, ou quasi inextensibles, de fils métalliques inextensibles ou quasi inextensibles, ou de filaments de matière de synthèse inextensibles ou quasi inextensibles.

3. Dispositif de jonction selon la revendication 2
   **caractérisé en ce que**
   les lisières du textile utilisé pour réaliser les armatures inextensibles ou quasi inextensibles (8, 9) sont disposées perpendiculairement à la direction de défilement de la bande transporteuse, le dispositif de jonction étant monté sur celle-ci.

4. Dispositif de jonction selon l'une quelconque des revendications précédentes,
   **caractérisé en ce que** l'extensibilité des armatures (7, 7a, 7b) fortement extensibles peut aller jusqu'à environ 20% de leur dimension à l'état de repos.

5. Dispositif de jonction selon l'une quelconque des revendications 1 à 4,
   **caractérisé en ce que** l'armature (7) de la plaque supérieure (2) est fortement extensible et compressible dans le sens longitudinal, tandis que l'armature (8) de la plaque inférieure (3) est inextensible ou quasi inextensible dans le sens longitudinal.

6. Dispositif de jonction selon l'une quelconque des revendications 1 à 4,
   **caractérisé en ce que** les armatures (7a, 7b) de la plaque supérieure (2) et respectivement de la plaque inférieure (3) sont fortement extensibles et **en ce qu'**une troisième armature (9), inextensible ou quasi inextensible, est disposée de manière à faire corps, grâce à la matière dont elle est enrobée, avec d'une part la face supérieure du côté gauche (3') ou bien avec celle du côté droit (3") de la plaque inférieure (3) et d'autre part avec la face inférieure du côté droit (2") ou bien avec celle du côté gauche (2') de la plaque supérieure (2), une partie centrale oblique de raccordement (9''') de ladite autre troisième armature (9) reliant ses deux parties (9', 9") qui font corps avec respectivement la plaque inférieure (3) et la plaque supérieure (2), en formant ainsi deux pseudo-charnières (10a, 10b) sur les lignes de raccordement avec respectivement la plaque supérieure (2) et la plaque inférieure (3).

**Patentansprüche**

1. Verbindungsvorrichtung für Förderbänder, aufweisend zwei Verbindungselemente, die in Form von Platten aus Elastomer oder aus Synthesematerial vorliegen, wobei die Platten Armierungen (7, 7a, 7b, 8, 9) aufweisen, wobei eine der Platten, als obere Platte (2) bezeichnet, während der Benutzung gegen die äußere Fläche der Förderbandenden (E, E) angeordnet ist und die andere Platte, als untere Platte (3) bezeichnet, während der Benutzung gegen die innere Fläche der Förderbandenden angeordnet ist, wobei die zwei Platten (2, 3) während der Benutzung der Verbindungsvorrichtung an den Förderbandenden mit Hilfe bekannter Mittel befestigt sind,

   **dadurch gekennzeichnet, dass**

   die Verbindungsvorrichtung mit Armierungen (7, 7a, 7b, 8, 9) ausgerüstet ist, deren Dehnbarkeits- und Komprimierbarkeitseigenschaften sich in horizontaler Richtung gemäß ihrer Anordnung innerhalb der Verbindungsvorrichtung sehr stark unterscheiden,

   und dadurch, dass die Dehnbarkeitsgrenze der unter der Wirkung von Zugkräften stark dehnbaren Armierungen (7, 7a, 7b) nicht erreicht ist, bevor, unter der Wirkung äquivalenter Zugkräfte, der Bruch der undehnbaren oder quasi undehnbaren Armierungen (8, 9) erfolgt.

**2.** Verbindungsvorrichtung nach Anspruch 1,
**dadurch gekennzeichnet, dass** Armierungen (8, 9) undehnbar oder quasi undehnbar sind und von einem Gewebe aus undehnbaren oder quasi undehnbaren Metallkabeln, undehnbaren oder quasi undehnbaren Metalldrähten oder undehnbaren oder quasi undehnbaren Filamenten aus Synthesematerial gebildet sind.

**3.** Verbindungsvorrichtung nach Anspruch 2,
**dadurch gekennzeichnet, dass**
die Kanten der für die Herstellung der undehnbaren oder quasi undehnbaren Armierungen (8, 9) verwendeten Textilie senkrecht zur Laufrichtung des Förderbandes angeordnet sind, wobei die Verbindungsvorrichtung auf diesem angebracht ist.

**4.** Verbindungsvorrichtung nach einem der vorangehenden Ansprüche,
**dadurch gekennzeichnet, dass** die Dehnbarkeit der stark dehnbaren Armierungen (7, 7a, 7b) bis zu zirka 20 % ihrer Größe im Ruhezustand betragen kann.

**5.** Verbindungsvorrichtung nach einem der Ansprüche 1 bis 4, **dadurch gekennzeichnet, dass** die Armierung (7) der oberen Platte (2) in der Längsrichtung stark dehnbar und komprimierbar ist, wogegen die Armierung (8) der unteren Platte (3) in der Längsrichtung undehnbar oder quasi undehnbar ist.

**6.** Verbindungsvorrichtung nach einem der Ansprüche 1 bis 4, **dadurch gekennzeichnet, dass** die Armierungen (7a, 7b) der oberen Platte (2) und beziehungsweise der unteren Platte (3) stark dehnbar sind und dadurch, dass eine dritte, undehnbare oder quasi undehnbar Armierung (9) derart angeordnet ist, dass sie dank des Materials, mit dem sie umhüllt ist, zum einen mit der oberen Fläche der linken Seite (3') beziehungsweise mit der der rechten Seite (3") der unteren Platte (3) und zum anderen mit der unteren Fläche der rechten Seite (2") beziehungsweise mit der der linken Seite (2') der oberen Platte (2) ein Stück bildet, wobei ein schräger zentraler Verbindungsteil (9''') der anderen dritten Armierung (9) seine beiden Teile (9', 9"), die mit jeweils der unteren Platte (3) und der oberen Platte (2) ein Stück bilden, verbindet, so dass dadurch zwei Pseudoscharniere (10a, 10b) auf den Verbindungslinien mit jeweils der oberen Platte (2) und der unteren Platte (3) gebildet werden.

**Claims**

**1.** A junction device for conveyor belts including two junction elements in the form of plates made of elastomer or of synthetic material, the plates including reinforcements (7, 7a, 7b, 8, 9), one of the plates, called upper plate (2) being, in use, disposed against the outer face of the ends (E, E) of the conveyor belt and the other plate, called lower plate (3) being, in use, disposed against the inner face of the ends of the conveyor belt, the two plates (2, 3) being, when using the junction device, fastened to the ends of the conveyor belt using known means,
**characterized in that**
the junction device is provided with reinforcements (7, 7a, 7b, 8, 9) whose extensibility and compressibility properties, in the horizontal direction, differ very strongly, according to their arrangement within the junction device,
and **in that** the limit of extensibility of the reinforcements (7, 7a, 7b), which are highly extensible under the effect of tensile forces, is not reached before the breaking of the inextensible or quasi-inextensible reinforcements (8, 9) occurs, under the effect of equivalent tensile forces.

**2.** The junction device according to claim 1
**characterized in that** reinforcements (8, 9) are inextensible or quasi-inextensible and are composed of a weaving of inextensible or quasi-inextensible metal cables, of inextensible or quasi-inextensible metal wires, or of inextensible or quasi-inextensible synthetic material filaments.

**3.** The junction device according to claim 2
**characterized in that** the edges of the textile used to make the inextensible or quasi-inextensible reinforcements (8, 9) are disposed perpendicular to the running direction of the conveyor belt, the junction device being mounted thereon.

**4.** The junction device according to any one of the preceding claims,
**characterized in that** the extensibility of the highly extensible reinforcements (7, 7a, 7b) can go up to about 20% of their dimension in idle state.

5. The junction device according to any one of claims 1 to 4,
   **characterized in that** the reinforcement (7) of the upper plate (2) is strongly extensible and compressible in the longitudinal direction, while the reinforcement (8) of the lower plate (3) is inextensible or quasi-inextensible in the longitudinal direction.

6. The junction device according to any one of claims 1 to 4,
   **characterized in that** the reinforcements (7a, 7b) of the upper plate (2) and respectively of the lower plate (3) are highly extensible and **in that** a third inextensible or quasi-inextensible reinforcement (9) is disposed so as to be integral, thanks to the material with which it is coated, on the one hand, with the upper face on the left side (3') or the upper face on the right side (3") of the lower plate (3) and, on the other hand, with the lower face on the right side (2") or the lower face on the left side (2') of the upper plate (2), an oblique central connection part (9''') of said other third reinforcement (9) connecting its two parts (9', 9") which are integral with respectively the lower plate (3) and the upper plate (2), thus forming two pseudo-hinges (10a, 10b) on the connecting lines with respectively the upper plate (2) and the lower plate (3).

fig. 1

fig. 2

fig. 3

fig. 4

fig. 5

fig. 6

fig. 7 vue a

fig. 7 vue b

2

3

9''

7a

10b

9'''

10a

7b

9'

fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5839571 A
- FR 2743611 A1